Europäisches Patentamt

European Patent Office

Office européen des brevets

(19)

(11) Veröffentlichungsnummer : **0 474 593 B1**

(12) **EUROPÄISCHE PATENTSCHRIFT**

(45) Veröffentlichungstag der Patentschrift :
**24.11.93 Patentblatt 93/47**

(51) Int. Cl.$^5$ : **B60R 13/08**

(21) Anmeldenummer : **91810651.9**

(22) Anmeldetag : **16.08.91**

(54) Schallisolierendes und schalldämpfendes Verbundwerk.

(30) Priorität : **03.09.90 CH 2844/90**

(43) Veröffentlichungstag der Anmeldung :
**11.03.92 Patentblatt 92/11**

(45) Bekanntmachung des Hinweises auf die
Patenterteilung :
**24.11.93 Patentblatt 93/47**

(84) Benannte Vertragsstaaten :
**CH DE ES FR GB IT LI NL SE**

(56) Entgegenhaltungen :
**DE-A- 3 623 789**
**DE-A- 3 832 583**
**FR-A- 2 273 336**
**PATENT ABSTRACTS OF JAPAN vol. 11, no.**
**102 (M-576)(2549) 31. März 1987 & JP-A-61 249**
**853 ( MAZDA MOTORS ) 7. November 1986**

(73) Patentinhaber : **MATEC HOLDING AG**
**Schüracherstrasse 36**
**CH-8700 Küsnacht (CH)**

(72) Erfinder : **Fortez, Maurice**
**55, rue Jean Jaurès**
**F-92170 Vanves (FR)**
Erfinder : **Alts, Thorsten, Prof. Dr.**
**Pestalozzistrasse 32**
**W-6101 Gross-Bieberau (DE)**
Erfinder : **Ehrler, Peter**
**Gross-Zimmerner-Strasse 5**
**W-6107 Reinheim 4 (DE)**

(74) Vertreter : **Seifert, Helmut E.**
**RITSCHER & SEIFERT Patentanwälte VSP**
**Kreuzstrasse 82**
**CH-8032 Zürich (CH)**

EP 0 474 593 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein schallisolierendes und schalldämpfendes Verbundwerk zur Lärmreduktion im Fahrzeugbau, mit mindestens einem schwingfähigen Bodenteil und einem offenporigen Isolationsbelag, sowie einen Isolationsbelag für ein solches Verbundwerk (siehe z.B. DE-A-3 832 583).

Schallisolierende Verbundwerke dieser Bauart aus porösen Materialien finden ihre Anwendung im Automobil- und Fahrzeugbau, wo Bodenbleche, Stirnwände, Kofferräume etc. mit solchen Verbundwerken versehen werden, um den von diesen Karosserieteilen erzeugten Lärmpegel zu reduzieren.

Massnahmen zur Reduktion von Schallimmissionen in den Fahrzeuginnenraum sind von besonderer Bedeutung, da die durch Lärm auftretenden Beeinträchtigungen anerkanntermassen zu subjektivem Unwohlsein, beispielsweise Kopfschmerzen, Herzklopfen oder erhöhtem Blutdruck führen. Es ist deshalb das Bestreben der modernen Automobilindustrie, den Geräuschpegel der Fahrzeuge so weit wie möglich zu reduzieren.

Die bekannten Massnahmen zur Reduktion des von vibrierenden Karosserieteilen erzeugten Lärmpegels beschränkten sich im wesentlichen auf zwei Massnahmen:
- Versteifung und Dämpfung der fraglichen Karosserieteile durch aufgeklebte bzw. aufgeschmolzene biegesteife, verlustbehaftete Dämpfungsfolien,
- Belegung der bedämpften oder nackten Karosserieteile mit einem Belag zur Schallisolation aus porösem und elastischem Material (Vlies oder Schaum) mit einer darauf fixierten Schwerschicht.

Ueblicherweise wird dieser Belag durch eine Dekor- oder Teppichlage zum Fahrzeuginnenraum hin abgeschlossen.

Diese handelsüblichen Schallisolationssysteme besitzen in Frequenzbereichen der 2. und 3. Ordnung der Motorkräfte und -momente, d.h. in Frequenzbereichen des höchsten Geräuschaufkommens, prinzipbedingte Resonanzeinbrüche mit entsprechend schlechter Schallisolation.

Es ist darum die Aufgabe der vorliegenden Erfindung, ein schallisolierendes und schalldämpfendes Verbundwerk zu schaffen, welches die Nachteile der bekannten Schallisolationssysteme nicht aufweist.

Insbesondere ist es die Aufgabe der vorliegenden Erfindung, ein schallisolierendes und schalldämpfendes Verbundwerk zu schaffen, welches diese Resonanzeinbrüche nicht aufweist. Weitere Aufgaben der vorliegenden Erfindung bestehen darin, ein Verbundwerk zu schaffen, welches gegenüber den herkömmlichen Verbundwerken eine kostengünstigere Montage ohne Verschmutzung der bei der Fertigung von Fahrzeugen verwendeten Farbbäder erlaubt, auch nach längerem Gebrauch seine schallisolierende und schalldämpfende Wirksamkeit unvermindert beibehält und eine einfache Demontage ermöglicht.

Erfindungsgemäss wird diese Aufgabe mit einem schallisolierenden und schalldämpfenden Verbundwerk der eingangs genannten Art gelöst, welches dadurch gekennzeichnet ist, dass der Isolationsbelag auf dem Bodenteil lose aufliegt, einen anisotropen Luftströmungswiderstand aufweist und der in Richtung der Auflageebene verlaufende laterale Luft-strömungswiderstand kleiner ist als der in Dickenrichtung verlaufende transversale Luftströmungswiderstand.

Mit dieser Kombination von technischen Merkmalen wird ein Verbundwerk geschaffen, welches gegenüber den herkömmlichen schalldämpfenden Massnahmen eine erheblich verbesserte akustische Wirksamkeit, insbesondere in den im Automobilbau stark störenden Frequenzbereichen, aufweist. Ausserdem können die hervorragenden akustischen Eigenschafen erhalten werden, ohne die Dicke oder das Flächengewicht des Verbundwerks zu vergrössern.

Ein wesentlicher Vorteil des erfindungsgemässen Verbundwerks liegt in seiner Verwendung bei der Automobilherstellung. Da das vorliegende Verbundwerk nicht aufgeklebt oder aufgeschmolzen wird, kann dieses ins Fahrzeug eingelegt werden, nachdem die Fahrzeugkarosserie ins Tauchbad getaucht und im Ofen getrocknet worden ist. Damit wird vermieden, dass Krümel der üblicherweise verwendeten Dämpfungsfolien das Tauchbad verschmutzen.

Ein weiterer wesentlicher Vorteil des erfindungsgemässen Verbundwerks zeigt sich bei der Entsorgung von ausgedienten Fahrzeugen. Im Gegensatz zu den üblicherweise verwendeten Dämpfungsfolien, welche auf die Karosserieteile aufgeschmolzen oder aufgeklebt sind, lassen sich die erfindungsgemässen Verbundwerke ohne jeglichen Aufwand wieder aus den Fahrzeugen entfernen.

Weitere überraschende Wirkungen und Vorteile ergeben sich für den Fachmann aus der folgenden Beschreibung. Durch die Schaffung eines akustisch abgestimmten Systems von offenen Kavitäten, Kanälen und Stegen auf der dem Bodenteil zugewandten Seite des porösen Materials wird nach Auflegen auf das Bodenteil ein Labyrinth von Hohlräumen und Kanälen geschaffen, das zusammen mit den stützenden Stegen eine wesentlich verbesserte und frequenzoptimierte Schallisolation erreicht, als es mit herkömmlichen Isolationssystemen bei gleichem Flächengewicht möglich ist. Insbesondere lässt sich mit dem erfindungsgemässen Verbundwerk bei den im Automobilbau üblichen Abmessungen und Gewichten eine tieffrequente Abstimmung erreichen, so dass eine besonders gute Schallisolation erreicht wird in Frequenzbereichen der 2. und 3. Ordnung der Motorkräfte und Momente bei Fahrzeugen mit Verbrennungsmotoren. Die Beseitigung der Resonanzeinbrüche hat ihre Ursache in einer erheblichen Schwingungsdämpfung durch die Anordnung der sich im Schaumoder Vliesuntergrund abstützenden Stege und einer wesentlichen Luftschalldissipation bei der Bewegung der Luft durch das Labyrinth der Kanäle und Hohlräume. Durch die optimierte Struktur der Stege, Kanäle und Hohlräume werden die dissipativen Mechanismen der Materialdämpfung im viskoelastischen Gerüstmaterial der porösen Schäume oder im Fasermaterial der Faservliese und die erhöhte Luftschallabsorption bei Mehrfachreflexion zwischen den Stegen und in den Hohlräumen in besonderer Weise im tieffrequenten Bereich angesprochen.

Erfindungsgemäss werden die dissipativen Verluste wie folgt erzwungen:

Die Stege tragen die gesamte Last des aufliegenden Belags. Das führt zu grösseren Verformungen in den Stegen selbst und in der Umgebung der Abstützungen in den Schaum- oder Vliesuntergrund, wobei neben Stauchungen auch Scherverformungen stark beteiligt sind. In einigem Abstand von den Abstützungen treten sogar Zugverformungen auf. Bei Schwingungsanregung in Richtung der Stege (= Dickenrichtung) durch das darunterliegende Bodenteil werden insbesondere in der Umgebung der Stegabstützung grössere Wechselverformungen der genannten Art erzeugt. Diese führen zu einer sehr guten Schwingungsdämpfung (Umwandlung von Schwingungsenergie in Wärme) durch viskoelastische Verluste im porösen Gerüstmaterial. Diese Verluste sind wesentlich grösser als bei planer Auflage des kompakten porösen Materials auf dem schwingenden Karosserieteil, da das kompakte Material wegen der gleichmässigen Auflage wesentlich weniger deformiert wird.

Eine weitere Form der Schwingungsdämpfung tritt auf bei lateralen Bewegungen des Karosserieteils in der lokalen Tangentialebene. Solche Schwingungsformen sind bei gebogenen Karosserieteilen vorhanden. Im erfindungsgemässen Verbundwerk erzeugen diese Schwingungen - bei Haftung der Stege am Karosserieteil - Scherdeformationen in den Stegen und den Stegabstützungen im Schaum- oder Vliesuntergrund durch Stegdrehungen. Entsprechende Deformationen und viskoelastische Verluste sind im kompakten Material der herkömmlichen Schallisolationen nicht vorhanden.

Ein wesentlicher Beitrag zur Schallisolation ist auf die Strömungsverluste der Luft bei deren Bewegung durch das Porensystem zurückzuführen. Innere Reibung, Wärmeleitung innerhalb der Luft und nichtelastischer Impulsaustausch der Luft mit den viskoelastischen Porenwänden oder den im Weg stehenden Fasern des offenporigen Materials sorgen für eine teilweise Umwandlung der Bewegungsenergie der Luft in Wärme. In makroskopisch isotropen, offenporigen Materialien wird die Gesamtheit dieser Verluste durch den spezifischen Strömungswiderstand charakterisiert. Dies gilt auch für akustische Schwingungen der Luft im Porensystem. Für eine gute hochfrequente Schallisolation existiert ein Optimum des Strömungswiderstandes. Der Resonanzeinbruch bei tiefen Frequenzen lässt sich allerdings durch Einstellung des sogenannten optimalen Strömungswiderstandes nicht vermeiden.

Der vorliegenden Erfindung liegt die Erkenntnis zugrunde, dass der Resonanzeinbruch in der Isolationskurve weitgehend vermieden werden kann, wenn die Luftströmung in der Auflageebene wenig behindert wird im Vergleich zur Luftströmung in Dickenrichtung. Das erfordert die Herstellung von anisotropen offenporigen Materialien mit mindestens zwei Strömungswiderständen, wobei der laterale Strömungswiderstand in Auflageebene wesentlich kleiner sein muss, als der transversale Strömungswiderstand in Dickenrichtung. Das gestattet nun die Ausnutzung eines im Innern des Verbundwerks ablaufenden akustischen Kurzschlusseffektes.

Die hauptsächliche Schallabstrahlung im Kraftfahrzeug, in Schienenfahrzeugen und Maschinen wird durch Biegeschwingungen der Karosseriebleche erzeugt. Im daraufliegenden anisotropen porösen Material wird dann oberhalb der aufschwingenden Bereiche der Bodenteile Ueberdruck erzeugt während in den daneben befindlichen oberhalb der abschwingenden Bereiche Unterdruck erzeugt wird. Bei nicht wesentlich behindertem Quertransport kommt es nahezu momentan zum Druckausgleich durch Strömung der Luft in der Auflageebene. Das hinwiederum bedingt einen wesentlich geringeren Druckaufbau in der Luftsäule oberhalb der aufschwingenden Bereiche und eine verminderte Beschleunigung der im Verbundwerk aufliegenden Isolationsschicht. Entsprechendes gilt für die Schicht oberhalb der abschwingenden Karosseriebereiche. Der Gesamteffekt ist eine verminderte Biegebeschleunigung der Isolationsschicht mit entsprechend verminderter Schallabstrahlung in den Fahrzeuginnenraum.

Es hat sich gezeigt, dass das erfindungsgemässe anisotrope Verbundwerk eine ausgezeichnete hochfrequente Schallisolation besitzt und gleichzeitig den Resonanzeinbruch im Bereich der tiefen Frequenzen vollständig beseitigt.

Die Herstellung von anisotropen Schäumen und Vliesen mit einem kleinen Strömungswiderstand in der Ebene des porösen Materials und einem vergleichsweise grossen Strömungswiderstand senkrecht dazu in Dickenrichtung, ist produktionstechnisch noch nicht zufriedenstellend gelöst.

Gute Resultate ergeben sich aus der erfindungsgemässen Konstruktion einer geometrischen Struktur, welche das für die akustische Isolation notwendige anisotrope Strömungsverhalten unter Ausnutzung des akustischen Kurzschlusses erzeugt. Die erfindungsgemässe geometrische Struktur aus komplexen Hohlräumen, Kanälen und Stegen schafft die notwendige effektive Strömungsanisotropie und ist auf die Vermeidung des tieffrequenten Resonanzeinbruches der Isolationskurve des Verbundwerkes abgestimmt. Die Stege, offenen Hohlräume und Kanäle sind so angeordnet, dass sie die laterale Luftschallausbreitung auf Grund des Kurzschlusses durch Mehrfachreflexion und Absoption an den Stegen etwas behindern und dass der transversale effektive Strömungswiderstand vergleichsweise gross ist.

Darüberhinaus wird noch folgender Strömungseffekt wirksam, der sich zusätzlich günstig auf das Isolationsverhalten des erfindungsgemässen Verbundwerkes auswirkt.

Durch das Eindrücken der Stege in das offenporige Material wird lokal eine Druckerhöhung in der an den Fussbereichen befindlichen Luft erzeugt. Dadurch entsteht im Porenbereich eine Luftströmung, die auf Umwegen und zeitlich verzögert in die offenen Kammern und Kanäle zurückfliesst. Das funktioniert aber nur bei offenen Kammern und Kanälen (welche ja ebenfalls durch die Abnahme der effektiven Steghöhe komprimiert werden), deren Druckerhöhung durch den akustischen Kurzschluss bereits vermindert worden ist. Es ist klar, dass bei geschlossenen Kammern dieser zusätzliche Verlustmechanismus nicht entsteht.

Neben den oben dargestellten, durch Konstruktion des erfindungsgemässen Verbundwerkes erzwungenen, dissipativen Mechanismen, sind noch weitere Material- und Systemparameter zu beachten. Dies sind die Dicke d des Verbundwerkes, dessen Masse pro Flächeneinheit $m_F$ und der effektive Elastizitätsmodul E, sowie der Schubmodul G. Darüberhinaus haben die Geometrie und die Abmessungen des Systems der offenen Hohlräume, Kanäle und Stege eine entscheidende Bedeutung für den Frequenzverlauf der Isolationskurve.

Alle bisherigen Verbundwerke zur Schallisolation sind in ihrer prinzipiellen Wirkungsweise Feder-Masse-Systeme und besitzen als solche grundsätzlich Resonanzeinbrüche im Frequenzverlauf der Isolationskurve.

Am stärksten ausgeprägt ist immer des Resonanzeinbruch bei der tiefsten Eigenfrequenz $f_0 = \frac{1}{2}\pi \sqrt{\frac{E}{d \cdot m_F}}$ (E = Elastizitätsmodul, d = Dicke, $m_F$ = Masse pro Flächeneinheit) für einfache Hubschwingungen des Systems.

Die Resonanzeinbrüche anderer Schwingungsformen (wie die unterschiedlichen Biegeschwingungen, die Torsionsschwingungen, die Scherschwingungen) liegen bei höheren Frequenzen und sind wegen der vorhandenen Materialdämpfung im Frequenzverlauf der Isolationskurve weniger stark ausgeprägt.

Im Automobilbau sind die Dicke des gesamten Isolationssystems und die Massenbelegung normalerweise in engen Grenzen vorgegeben. Eine gute hochfrequente Schallisolation kann also nur durch einen möglichst kleinen Elastizitätsmodul des porösen Materials (Federschicht) erreicht werden. Damit aber erzeugt man einen tiefen Resonanzeinbruch der Isolationskurve in der Frequenzumgebung der Hubschwingungsresonanz, und das im tieffrequenten Bereich der 2. und 3. Motorordnung der Automobile, d.h. dem Bereich mit dem stärksten Lärmangebot.

Durch Wahl eines vergrösserten E-Moduls lässt sich die tiefste Resonanzfrequenz $f_0$ des Isolationssystems aus dem Frequenzbereich der 2. und 3. Motorordnung (bei Pkw's bis 300 Hz) auf die hochfrequente Seite schieben. Man erreicht so eine bessere tieffrequente Schallisolation, muss aber eine wesentliche Verschlechterung im hochfrequenten Bereich hinnehmen.

Mit dem erfindungsgemässen Verbundwerk wird durch seine spezielle Konstruktion das oben erwähnte herkömmliche technische Handeln bei der Optimierung der Isolationssysteme aufgehoben. Durch Wahl eines relativ harten Schaumes oder eines verdichteten Vlieses mit grossem E-Modul wird die Resonanzfrequenz für Hubschwingungen in den höherfrequenten Bereich verschoben, wo die durch Konstruktion erzwungenen verstärkten Dämpfungsmechanismen den Resonarizeinbruch kompensieren und somit auch hochfrequent eine gute Isolation erreicht wird. Das erfindungsgemässe Verbundwerk zur Schallisolation besitzt damit einen frequenzabhängigen effektiven E-Modul (wirksame Federkonstante), der bei tiefen Frequenzen relativ gross ist und mit anwachsender Frequenz stark abnimmt. Dies hat seine Ursache in der speziellen Struktur und Konstruktion der Hohlräume, Kanäle und Stege.

Die erprobten Isolationsverbundwerke mit hochgefülltem offenporigem und relativ steifem Polyurethan-Schaum und mit angeschäumten Oberflächenstrukturen auf der einen Seite sowie angeschäumtem Teppich bzw. angeschäumter PVC-Schicht auf der anderen Seite, besitzen neben der guten Schallisolation - auf Grund des relativ grossen statischen E-Moduls - auch noch hervorragende lasttragende Eigenschaften. Sie sind deshalb besonders gut geeignet in Transportfahrzeugen, in denen die Ladefläche schallisoliert werden muss. Eine hohe Trittfestigkeit dieser Systeme ist auch aus psychologischen Gründen von der Automobilindustrie in hohem Masse gefordert.

Solche aus Schwerschaum hergestellten erfindungsgemässen Verbundwerke besitzen neben der Schallisolation bei direkter Auflage auf das Karosserieblech auch noch dämpfende Eigenmassnahmen am Blech selbst weitgehend verzichten kann.

In einer bevorzugten Ausführungsform wird die geometrische Struktur des Isolationsbelags aus Abstützelementen gebildet, welche im wesentlichen aus im Dreieck stehenden Stegen bestehen. Zwischen diesen Abstützelementen befinden sich Sperrstege, welche einerseits den lateralen Luftströmungswiderstand im Hohlraumlabyrinth erhöhen und andererseits die mechanische Stabilität der Trägerschicht verbessern. Es versteht sich, dass für die Bildung des komplexen Hohlraumlabyrinths beliebige Anordnungen der Abstützelemente in Betracht kommen können.

Weitere bevorzugte Ausführungsformen und Merkmale des erfindungsgemässen Verbundwerks ergeben sich für den Fachmann aus den Ansprüchen.

Nachfolgend wird die vorliegende Erfindung anhand von Ausführungsbeispielen und mit Hilfe der Figuren näher erläutert. Es zeigen:

Fig. 1: Eine schematische Darstellung eines Querschnitts durch ein erfindungsgemässes Verbundwerk,

Fig. 2: in perspektivischer Darstellung eine schematische Unteransicht des erfindungsgemässen Isolationsbelags,

Fig. 3: eine Darstellung mit Vergleichsmessungen der frequenzabhängigen Lärmisolationswirkung,

Fig. 4: eine Messkurve der frequenzabhängigen Isolationswirkung eines geometrisch optimierten, erfindungsgemässen Verbundwerks.

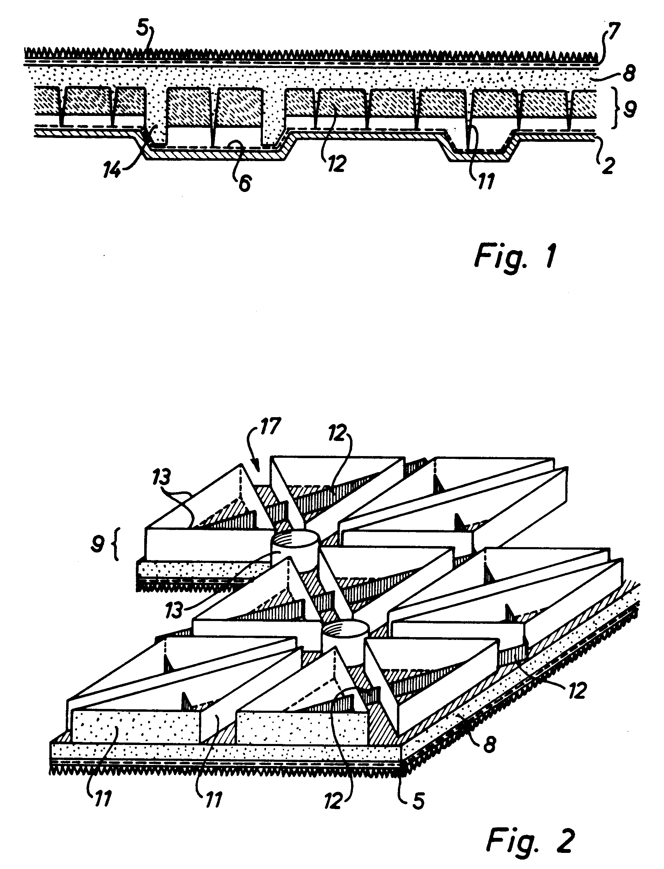

Das in Fig. 1 dargestellte Verbundwerk umfasst mehrere Beläge, welche sich erfindungsgemäss in zwei lose aufeinanderliegende Gruppen zusammenfassen lassen. Die erste Gruppe umfasst einen schwingfähigen Bodenteil 2, welcher mit den im Fahrzeugbau üblichen Beschichtungen 6, insbesondere Farbbeschichtung, Korrosionsschutz, oder eine textile oder textilähnliche Finition versehen sein kann, und welche Gruppe erfindungsgemäss schallisolierend und schalldämpfend mit der zweiten Gruppe von Belägen verbunden wird.

Die zweite Gruppe von Belägen umfasst im wesentlichen einen Isolationsbelag 8, 9 mit einem anisotropen Luftströmungswiderstand. Diese Anisotropie ist der Gestalt, dass die von der ersten Gruppe zu Schwingungen angeregte Luft in lateraler Richtung wenig gehindert strömen kann, während sie in Dickenrichtung des Verbundwerks nur stark gehindert strömen kann. Die damit erzielten Wirkungen sind oben bereits detailliert beschrieben. In der vorliegenden Darstellung weist dieser Isolationsbelag zwei Schichten auf, eine Trägerschicht 9 und eine Deckschicht 8. Erfindungsgemäss umfasst die Trägerschicht 9 eine Vielzahl Abstützelemente 13, welche aus schmalen Stegen 11 oder aus breiten Anlege-Elementen 14 gebildet sind. Dabei versteht es sich für den Fachmann von selbst, diese Abstützelemente 13 der Topografie des Untergrundes entsprechend zu dimensionieren.

In einer weiteren Ausführungsform kann die Trägerschicht 9 andere Materialeigenschaften aufweisen als die Deckschicht 8. Insbesondere können sich diese Schichten in ihrer Härte unterscheiden und kann die Trägerschicht aus einem nichtporösen Material bestehen.

In einer bevorzugten Ausführungsform weist die Trägerschicht 9 quer zu den Stegen 11 oder Anlege-Elementen 14 liegende Sperrstege 12 auf, deren Höhe geringer ist als die Höhe der Abstützelemente 13. Durch Variation der Höhe dieser Sperrstege 12 kann die Anisotropie des Luftströmungswiderstandes den gewünschten Verhältnissen optimal angepasst werden.

Erfindungswesentlich ist, dass zwischen den beiden lose aufeinanderliegenden Gruppen von Belägen ein komplexes Hohlraumlabyrinth, d.h. ein zusammenhängendes System aus verschiedenen Kanälen und Kammern gebildet wird. Es versteht sich, dass vereinzelt auch in sich geschlossene Kammern gebildet werden können, welche aber erfindungsgemäss wegen des lose aufliegenden Verbundes und der Porosität des Materials als Teile des komplexen Hohlraumlabyrinths mit erhöhtem Luftströmungswiderstand zu betrachten sind.

In einer bevorzugten Ausführungsform weist der Isolationsbelag 8, 9 einen textilen oder textilähnlichen Dekorbelag 5 auf. Insbesondere ist die Deckschicht 8 mit einer Schutzschicht 7 versehen.

Dem Fachmann sind geeignete Materialien für jede dieser Schichten und Beläge hinlänglich bekannt. Bei den erprobten Ausführungsbeispielen sind die Trägerschicht 9 und die Deckschicht 8 einstückig aus hochgefülltem, relativ steifem PUR-Schaum geformt und besteht die Schutzschicht aus einer dünnen PVC-Folie.

Bei anderen erprobten Ausführungsformen wurde für den Isolationsbelag 8, 9 ein verpresstes Faservlies verwendet, wie es in der Automobilindustrie hinlänglich bekannt und beispielsweise in der FR-A-2265147 beschrieben ist.

Dieses Faservlies besteht im wesentlichen aus natürlichen tierischen oder pflanzlichen Fasern, wie Schafswoll-, Baumwoll-, Kokos- oder Seidefasern, und kann mit Kunstfasern angereichert sein. Die Fasern sind untereinander mit thermohärtenden Kunstharztropfen verbunden. Eine geeignete mikroporöse wasser- und ölundurchlässige Imprägnierung, wie sie beispielsweise in obiger französischer Patentschrift offenbart ist, schützt das Vlies vor Feuchtigkeit und Verschmutzung.

Insbesondere wurde für die vorliegende Erfindung ein solches Faservlies mit einer Dichte von 60 kg/m$^3$ und einem spezifischen Luftströmungswiderstand von $1{,}2 \times 10^4$ Ns/m$^4$ verwendet, was bei einem 20 mm dicken Vlies einem absoluten Luftwiderstand von ca. 200 Ns/m$^4$ entspricht.

Fig. 2 zeigt schematisch in perspektivischer Darstellung die Unterseite eines beschichteten Isolationsbelags. Deutlich zu erkennen sind die Abstützelemente 13, welche hohlprismaförmig und hohlzylinderförmig ausgebildet sind.

In einer bevorzugten Ausführungsform weisen die hohlprismaförmigen Abstützelemente 13 eine Hypotenusen-Kantenlänge von 42,4 mm und eine Katheten-Kantenlänge von jeweils 30 mm auf. Bei den hohlzylinderförmigen Abstützelementen beträgt der Aussendurchmesser 30 mm. Die Höhe der diese Abstützelemente 13 bildenden Stege 11 beträgt 10 mm. Der Querschnitt dieser Stege 11 ist bevorzugt trapezförmig und ist an seiner Basis respektive deckschichtseitig 3 mm breit, während die freie Kante 1,8 mm beträgt.

Obwohl die bevorzugte Ausführungsform im wesentlichen hohlprismaförmige Abstützelemente 13 zeigt, liegen für den Fachmann auch hohlquaderförmige oder andersförmige Abstützelemente 13 im Bereich seines technischen Handelns. Solche hohlquaderförmige Abstützelemente können beispielsweise eine Kantenlänge von 26 mm aufweisen. Aus verfahrenstechnischen Gründen weisen die inneren Ecken der Abstützelemente 13 eine Rundung von ca. 2 mm Radius auf. Aus Fig. 2 ist ersichtlich, wie durch geeignete Anordnung der Abstützelemente 13, Kanäle 17 gebildet werden. In der bevorzugten Ausführungsform weisen diese Kanäle 17 eine Breite von 20 mm resp. eine solche von 14 mm auf. Deutlich erkennbar sind auch die quer in den Kanälen 17 liegenden Sperrstege 12, deren Höhe gegenüber den Stegen 11 erfindungsgemäss geringer ist. In der bevorzugten Ausführungform beträgt die Höhe dieser Sperrstege 12 ca. 5 mm. Solche Sperrstege können auch im Innern der Stützelemente 13 liegen und verbessern damit die Stabilität der Trägerschicht 9 und die Trittfestigkeit des gesamten Verbundwerks. Es versteht sich, dass die poröse Trägerschicht 9 und die Deckschicht 8 aus elastischen Schäumen bestehen, wie sie jedem Fachmann auf dem Gebiet der Schallisolation bekannt sind. Insbesondere können beide Schichten 8, 9, inklusive der Querstege 12, aus dem gleichen Material geformt sein. Als besonders geeignet dafür hat sich offenporiger, hochgefüllter und relativ steifer Polyurethan-Schaum (PUR-900) erwiesen.

Die Dicke des Isolationsbelags 8, 9 aus Trägerschicht 9 und Deckschicht 8 beträgt in einer ersten Ausführungsform 15 mm. Bei dieser Ausführungsform wurde ein Schwerschaum mit einem effektiven Raumgewicht von $\rho = 630$ kg/m$^3$ verwendet. Das Flächengewicht der gesamten Isolationsschicht, inklusiv Schutzschicht 7 und Dekorschicht 5, betrug $m_F = 10{,}7$ kg/m$^2$.

In einer zweiten Ausführungsform mit hohlquaderförmigen Auflageelementen beträgt die Dicke des unbeschichteten Isolationsbelags 17 mm, das effektive Raumgewicht des verwendeten Schwerschaums (PUR-900) $\rho = 800$ kg/m$^3$. Das Flächengewicht des gesamten Isolationsbelags 8, 9, einschliesslich Teppichschicht, beträgt $m_F = 14{,}5$ kg/m$^2$.

In einer weiteren erprobten Ausführungsform wurde ein lokal unterschiedlich tief verpresstes Faservlies verwendet. Die Stegbreite und -höhe bei dieser Ausführungsform beträgt ca. 4 mm, während das Hohlraumlabyrinth Kanäle mit einer Breite von ca. 16 mm aufweist. Dieses Faservliesteil weist eine Dicke von ca. 20 mm auf und trägt eine Schwerschicht von ca. 4,5 kg/m$^2$. Vergleichsmessungen dieser Ausführungsform mit einem flach aufliegenden Vlies zeigen die Wirkung des erfindungsgemäss erzeugten akustischen Kurzschlusses:

| Dichte | dyn. Elastizitätsmodul des flachen Vlieses | dyn. Elastizitätsmodul des erf.gem. Vlieses |
|---|---|---|
| 60 kg/m$^3$ | 0,10 daN/cm$^2$ | 0,06 daN/cm$^2$ |
| 80 kg/m$^3$ | 0,38 daN/cm$^2$ | 0,25 daN/cm$^2$ |
| 130 kg/m$^3$ | 0,85 daN/cm$^2$ | 0,34 daN/cm$^2$ |

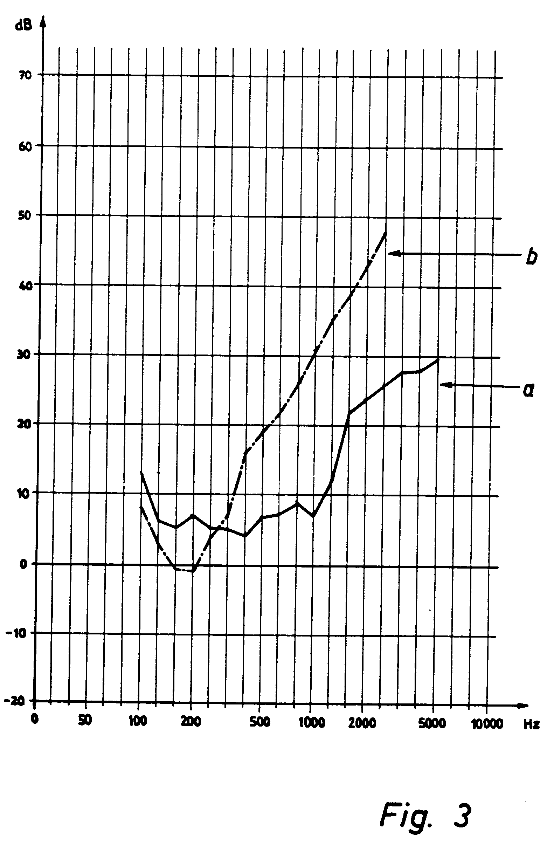

Fig. 3 zeigt den durch das erfindungsgemässe Verbundwerk erzielten Effekt anhand zweier Messkurven. Die Messkurve b) zeigt den frequenzabhängigen Verlauf der Isolationswirkung für ein klassisches Isolationssystem, bestehend aus einer metallischen Bodenplatte, einer aufgeklebten Faservliesschicht und einer darauf befestigten Schwerschicht mit einem Flächengewicht von 10 kg/m$^2$. Die Dicke dieses gesamten klassischen Isolationssystems ohne Teppichschicht, betrug 18 mm. Diese Messkurve zeigt die hervorragende Isolationswirkung dieses System in höherfrequentem Bereich und weist einen deutlichen Resonanzeinbruch bei ca. 200 Hz auf. Bei tieferen Frequenzen nimmt die akustische Wirksamkeit dieses Systems wieder zu. Dem gegenüber zeigt die Kurve a) das frequenzabhängige Verhalten eines erfindungsgemässen Verbundwerks aus Schwerschaum und mit einem Flächengewicht von 9,8 kg/m².

Obwohl die Flächengewichte dieser beiden Isolationssysteme vergleichbar sind, tritt mit dem erfindungsgemässen Verbundwerk der oben genannte Resonanzeinbruch überraschend deutlich nicht mehr auf.

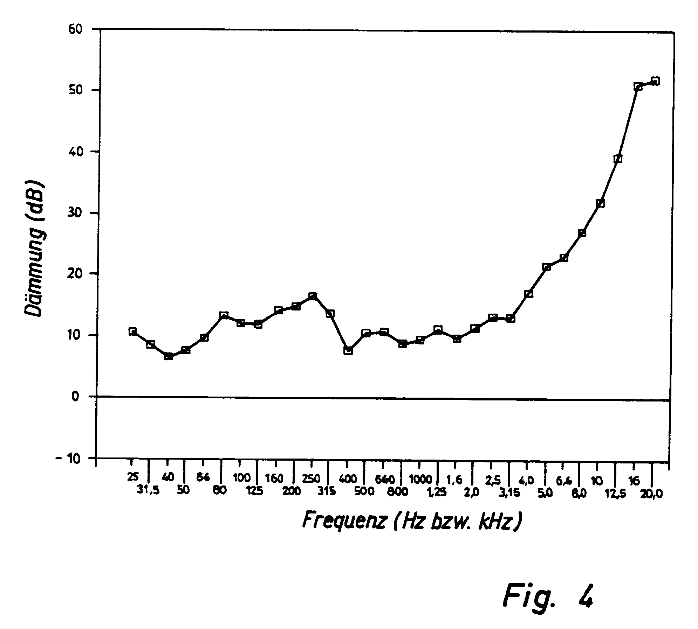

Eine weitere Verbesserung der akustischen Wirksamkeit wird, wie aus Fig. 4 ersichtlich, mit einem erfindungsgemässen Verbundwerk mit dreieckförmigen Stützelementen erzielt. Der für diese Messkurve verwendete Isolationsbelag besteht aus einer Trägerschicht mit dreieckförmigen Abstützelementen 13 und einer Deckschicht, beide aus PUR-900 mit einer Shore-Härte von 50. Damit wirkt dieser Teil des Isolationsbelags als akustische Feder, während ein auf dieses System aufgeschäumter Teppich als akustische Masse wirkt. Das Gesamtgewicht beträgt wiederum 10 kg/m². Diese Messkurve zeigt keinen Resonanzeinbruch auf und erzeugt eine Isolationswirkung von 10 dB ± 3 dB in einem weiten Bereich von 25 bis 2500 Hz.

Es versteht sich, dass zur Frequenzanpassung und Optimierung vorgenommene Aenderungen im Bereich des fachmännischen Könnens liegen. Insbesondere bestehen solche Aenderungen in der gezielten Auswahl von Materialdaten, wie Elastizitätmodul, Schubmodul und Verlustfaktor. Aenderungen des Strömungswiderstandes können durch folgende Parameter erzielt werden: Dicke des porösen Isolationssystems, Höhe und Grundabmessungen sowie Oberflächenbeschaffenheit der Hohlräume des komplexen Hohlraumlabyrinths, sowie Aenderungen der Geometrie der Abstützelemente.

## Patentansprüche

1. Schallisolierendes und schalldämpfendes Verbundwerk zur Lärmreduktion im Fahrzeugbau mit mindestens einem schwingfähigen Bodenteil (2) und einem offenporigen Isolationsbelag (8, 9),
dadurch gekennzeichnet, dass
   - der Isolationsbelag (8, 9) auf dem Bodenteil (2) lose aufliegt,
   - einen anisotropen Luftströmungswiderstand aufweist
   - und der in Richtung der Auflageebene verlaufende laterale Luftströmungswiderstand kleiner ist als der in Dickenrichtung verlaufende transversale Luftströmungswiderstand.

2. Schallisolierendes und schalldämpfendes Verbundwerk gemäss Anspruch 1, dadurch gekennzeichnet, dass zur Erzeugung des anisotropen Luftströmungswiderstandes der Isolationsbelag (8, 9) bodenteilseitig eine geometrische Struktur aufweist, welche zusammen mit dem Bodenteil (2) ein komplexes Hohlraumlabyrinth bildet.

3. Schallisolierendes und schalldämpfendes Verbundwerk gemäss Anspruch 2, dadurch gekennzeichnet, dass bei vorgegebener Dicke d und Masse pro Flächeneinheit $m_F$ des Isolationsbelags (8, 9) der Elastizitätsmodul E dieses Belags einen Wert aufweist, bei welchem die tiefste Eigenfrequenz $f_0 = \frac{1}{2}\pi \sqrt{\frac{E}{d \cdot m_F}}$ im Frequenzbereich liegt, in welchem die von der geometrischen Struktur des Hohlraumlabyrinthes erzeugten dissipativen Dämpfungs- und Strömungsverluste akustisch wirksam sind.

4. Schallisolierendes und schalldämpfendes Verbundwerk gemäss Anspruch 3, dadurch gekennzeichnet, dass der Isolationsbelag (8, 9) fahrgastseitig einen Dekorbelag (5) umfasst.

5. Schallisolierendes und schalldämpfendes Verbundwerk gemäss Anspruch 3, dadurch gekennzeichnet, dass das komplexe Hohlraumlabyrinth mindestens partiell eine weitere Beschichtung (6) aufweist.

6. Isolationsbelag für ein schallisolierendes und schalldämpfendes Verbundwerk gemäss Anspruch 1, dadurch gekennzeichnet, dass der Isolationsbelag mindestens aus einer Deckschicht (8) und einer eine Vielzahl Abstützelemente (11) aufweisenden Trägerschicht (9) besteht.

7. Isolationsbelag gemäss Anspruch 6, dadurch gekennzeichnet, dass quer zwischen den Abstützelementen (11) liegende Sperrstege (12) angeordnet sind, deren Höhe geringer ist als die Höhe der Abstützelemente (11).

8. Isolationsbelag gemäss Anspruch 7, dadurch gekennzeichnet, dass die Abstützelemente aus Stegen (13) gebildet werden, deren Höhe im kleinen der Topographie des Bodenteils angepasst ist, so dass die Deckschicht (8) im grossen parallel zum Bodenteil (2) liegt.

9. Isolationsbelag gemäss Anspruch 7, dadurch gekennzeichnet, dass die Deckschicht (8) und die Trägerschicht (9) verschiedene Materialeigenschaften aufweisen.

10. Isolationsbelag gemäss Anspruch 6, dadurch gekennzeichnet, dass der Isolationsbelag (8, 9) fahrgastseitig mit einer Schutzschicht (7) versehen ist.

11. Isolationsbelag gemäss Anspruch 6, dadurch gekennzeichnet, dass zwischen den Abstützelementen (11) der Trägerschicht (9) mindestens teilweise ein offenporiges Material liegt.


## Claims

1. Sound-insulating and sound-absorbing laminate for noise reduction in vehicle construction, having at least one floor part (2) capable of vibrating and an open-pore insulation covering (8, 9),
   characterised in that
   - the insulation covering (8, 9) rests loosely on the floor part (2) and
   - has an anisotropic air flow resistance
   - and the lateral air flow resistance in the direction of the plane of support is smaller than the tranverse air flow resistance in the direction of the thickness.

2. Sound-insulating and sound-absorbing laminate according to Claim 1, characterised in that the insulation covering (8, 9) has, on its side facing the floor part, a geometric structure which, together with the floor part (2), forms a complex cavity labyrinth, for generating the anisotropic air flow resistance.

3. Sound-insulating and sound-absorbing laminate according to Claim 2, characterised in that, for a predetermined thickness d and mass per unit area $m_F$ of the insulation covering (8, 9), the modulus of elasticity E of this covering has a value at which the lowest natural frequency $f_0 = \frac{1}{2}\pi \sqrt{\frac{E}{d \cdot m_F}}$ is in the frequency range in which the dissipative absorption and flow losses produced by the geometric structure of the cavity labyrinth are acoustically effective.

4. Sound-insulating and sound-absorbing laminate according to Claim 3, characterised in that the insulation covering (8, 9) comprises a decorative covering (5) on the passenger side.

5. Sound-insulating and sound-absorbing laminate according to Claim 3, characterised in that the complex cavity labyrinth has, at least partially, a further layer (6).

6. Insulation covering for a sound-insulating and sound-absorbing laminate according to Claim 1, characterised in that the insulation covering consists at least of a cover layer (8) and a support layer (9) having a large number of support elements (11).

7. Insulation- covering according to Claim 6, characterised in that barrier webs (12) lying transversely between the support elements (11) are present, the height of said barrier webs being smaller than the height of the support elements (11).

8. Insulation covering according to Claim 7, characterised in that the support elements are formed from webs (13), the height of which is adapted in detail to the topography of the floor part, so that the cover layer (8) is in general parallel to the floor part (2).

9. Insulation covering according to Claim 7, characterised in that the cover layer (8) and the support layer (9) have different material properties.

10. Insulation covering according to Claim 6, characterised in that the insulation covering (8, 9) is provided with a protective layer (7) on the passenger side.

11. Insulation covering according to Claim 6, characterised in that an open-pore material is present, at least partly, between the support elements (11) of the support layer (9).

**Revendications**

1. Structure composite pour isolation et atténuation phonique permettant de réduire les bruits produits dans les véhicules, comprenant au moins une partie de fond (2) pouvant être mise en vibration et une couche d'isolation (8, 9) à pores ouverts, caractérisée en ce que
   - la couche d'isolation (8, 9) repose librement sur la partie de fond;
   - la couche d'isolation présente une résistance aérodynamique anisotrope ;
   - la résistance aérodynamique latérale orientée dans le sens du plan d'appui est inférieure à la résistance aérodynamique transversale orientée dans le sens de l'épaisseur.

2. Structure composite pour isolation et atténuation phonique selon la revendication 1, caractérisée en ce que la couche d'isolation (8, 9) afin de produire la résistance aérodynamique anisotrope présente du côté de la partie de fond une structure géométrique constituant, avec la partie de fond (2), un labyrinthe complexe à espaces creux.

3. Structure composite pour isolation et atténuation phonique selon la revendication 2, caractérisée en ce que, pour une épaisseur donnée d et une masse $m_F$ par unité de surface de la couche d'isolation (8, 9), le module d'élasticité E de cette couche présente une valeur pour laquelle la fréquence propre la plus basse $f_0 = 1/2\pi \sqrt{E/d \cdot m_F}$ se situe dans la plage de fréquence dans laquelle les pertes par dissipation d'atténuation et de flux produites par la structure géométrique du labyrinthe à espaces creux sont efficaces sur le plan acoustique.

4. Structure composite pour isolation et atténuation phonique selon la revendication 3, caractérisée en ce que la couche d'isolation (8, 9) comprend une couche décorative (5) du côté intérieur de l'habitacle.

5. Structure composite pour isolation et atténuation phonique selon la revendication 3, caractérisée en ce que le labyrinthe complexe à espaces creux présente au moins partiellement une couche complémentaire (6).

6. Couche d'isolation pour une structure composite pour isolation et atténuation phonique selon la revendication 1, caractérisée en ce que la couche d'isolation comprend au moins une couche de couverture (8) et une couche de support (9) présentant un grand nombre d'éléments d'appui (11).

7. Couche d'isolation selon la revendication 6, caractérisée en ce que des entretoises de retenue (12) sont disposées transversalement entre les éléments d'appui (11), la hauteur des entretoises de retenue étant inférieure à la hauteur des éléments d'appui (11).

8. Couche d'isolation selon la revendication 7, caractérisée en ce que les éléments d'appui sont constitués de traverses (13) dont la hauteur est adaptée au détail de la topographie de la partie de fond de manière que la couche de couverture (8) se trouve en gros parallèle à la partie de fond (2).

9. Couche d'isolation selon la revendication 7, caractérisée en ce que la couche de couverture (8) et la couche de support (9) présentent chacune des caractéristiques de matières différentes.

10. Couche d'isolation selon la revendication 6, caractérisée en ce que la couche d'isolation (8, 9) est munie, du côté intérieur de l'habitacle, d'une couche de protection (7).

11. Couche d'isolation selon la revendication 6, caractérisée en ce qu'une matière à pores ouverts est posée au moins partiellement entre les éléments d'appui (11) de la couche de support (9).

Fig. 1

Fig. 2

*Fig. 3*

11

Fig. 4